# EUROPEAN PATENT APPLICATION

(11) **EP 4 557 811 A1**
(43) Date of publication of application: **21.05.2025**
(21) Application number: 23845560.4
(22) Date of filing: 25.07.2023
(51) Int. Cl.: H04W 24/08

(54) **MEASUREMENT METHOD AND APPARATUS, AND DEVICE**

(30) Priority: 29.07.2022 CN 202210911315
(71) Applicant: Vivo Mobile Communication Co., Ltd., Dongguan, Guangdong 523863 (CN)
(72) Inventor: PU, Wenjuan, Dongguan, Guangdong 523863 (CN); YANG, Xiaodong, Dongguan, Guangdong 523863 (CN)
(74) Representative: Murgitroyd & Company
(86) International application number: PCT/CN2023/109163
(87) International publication number: WO 2024/022351

(57) **Abstract**

This application discloses a measurement method and apparatus, and a device, and belongs to the communication field. The measurement method in embodiments of this application includes: performing, by a terminal, a first operation in a case that a first condition is met, where the first operation includes at least one of starting first measurement, reporting a measurement result according to a first measurement result reporting configuration, and starting a conditional reconfiguration procedure, and the first condition is related to a height and/or a beam of the terminal.

## Description

This application claims priority to Chinese Patent Application No. 202210911315.6, filed with the China National Intellectual Property Administration on July 29, 2022 and entitled "MEASUREMENT METHOD AND APPARATUS, AND DEVICE", which is incorporated herein by reference in its entirety.

### TECHNICAL FIELD

This application belongs to the field of communication technologies, and specifically, relates to a measurement method and apparatus and a device.

### BACKGROUND

Currently, a network side device configures proper measurement for a terminal to support mobility of the terminal or perform cross-link interference management. However, when configuring measurement for the terminal, the network side device does not fully consider height and/or beam information of the terminal, resulting in inflexible mobility of the terminal or inflexible cross-link interference measurement management, which affects communication performance of the terminal. For example, for a terminal that has a flight capability, when a flight height of the terminal gradually increases, because occlusions caused by obstacles are gradually reduced, the terminal may gradually receive a signal of a cell farther away, so that the cell farther away (a remote cell) can be accessed. When the flight height of the terminal gradually decreases, because a distance between the flight terminal and a ground terminal is gradually shortened, cross-link interference to the flight terminal from the ground terminal and cross-link interference to the ground terminal from the flight terminal gradually increase. Because the network side does not configure measurement according to needs of the terminal, the terminal is not configured with a corresponding measurement configuration in a case that it is needed, or is configured with corresponding measurement in a case that it is not needed, resulting in unnecessary power consumption.

### SUMMARY

Embodiments of this application provide a measurement method and apparatus and a device, to improve communication performance of a terminal.

According to a first aspect, a measurement method is provided and is applied to a terminal. The method includes:
performing, by the terminal, a first operation in a case that a first condition is met, where the first operation includes at least one of:
starting first measurement;
reporting a measurement result according to a first measurement result reporting configuration; and
starting a conditional reconfiguration procedure; and
the first condition is related to a height and/or a beam of the terminal.

According to a second aspect, a measurement apparatus is provided, including:
a processing module, configured to perform a first operation in a case that a first condition is met, where the first operation includes at least one of:
starting first measurement;
reporting a measurement result according to a first measurement result reporting configuration; and
starting a conditional reconfiguration procedure; and
the first condition is related to a height and/or a beam of a terminal.

According to a third aspect, a measurement method is provided, and is applied to a network side device. The method includes:
sending, by the network side device, a first configuration to a terminal, where the first configuration includes a parameter related to a first condition, and further includes at least one of:
a measurement configuration corresponding to first measurement;
a first measurement result reporting configuration; and
a conditional reconfiguration parameter corresponding to a conditional reconfiguration procedure; and
the first condition is used to trigger the terminal to perform a first operation in a case that the terminal meets the first condition, and the first operation includes at least one of:
starting the first measurement;
reporting a measurement result according to the first measurement result reporting configuration; and
starting the conditional reconfiguration procedure.

According to a fourth aspect, a measurement apparatus is provided, including:
a transceiver module, configured to send a first configuration to a terminal, where the first configuration includes a parameter related to a first condition, and further includes at least one of:
a measurement configuration corresponding to first measurement;
a first measurement result reporting configuration; and
a conditional reconfiguration parameter corresponding to a conditional reconfiguration procedure; and
the first condition is used to trigger the terminal to perform a first operation in a case that the terminal meets the first condition, and the first operation includes at least one of:
starting the first measurement;
reporting a measurement result according to the first measurement result reporting configuration; and
starting the conditional reconfiguration procedure.

According to a fifth aspect, a terminal is provided. The terminal includes a processor and a memory. The memory stores a program or instructions executable on the processor, and the steps of the method according to the first aspect are implemented when the program or instructions are executed by the processor.

According to a sixth aspect, a terminal is provided, including a processor and a communication interface. The processor is configured to perform a first operation in a case that a first condition is met. The first operation includes at least one of:
starting first measurement;
reporting a measurement result according to a first measurement result reporting configuration; and
starting a conditional reconfiguration procedure.

The first condition is related to a height and/or a beam of the terminal.

According to a seventh aspect, a network side device is provided. The network side device includes a processor and a memory. The memory stores a program or instructions executable on the processor, and the steps of the method according to the third aspect are implemented when the program or instructions are executed by the processor.

According to an eighth aspect, a network side device is provided, including a processor and a communication interface. The communication interface is configured to send a first configuration to a terminal. The first configuration includes a parameter related to a first condition, and further includes at least one of:
a measurement configuration corresponding to first measurement;
a first measurement result reporting configuration; and
a conditional reconfiguration parameter corresponding to a conditional reconfiguration procedure.

The first condition is used to trigger the terminal to perform a first operation in a case that the terminal meets the first condition. The first operation includes at least one of:
starting the first measurement;
reporting a measurement result according to the first measurement result reporting configuration; and
starting the conditional reconfiguration procedure.

According to a ninth aspect, a communication system is provided, including a terminal and a network side device. The terminal may be configured to perform the steps of the measurement method according to the first aspect, and the network side device may be configured to perform the steps of the measurement method according to the third aspect.

According to a tenth aspect, a readable storage medium is provided. The readable storage medium stores a program or instructions, and the steps of the method according to the first aspect or the steps of the method according to the third aspect are implemented when the program or instructions are executed by a processor.

According to an eleventh aspect, a chip is provided. The chip includes a processor and a communication interface. The communication interface is coupled to the processor, and the processor is configured to run a program or instructions to implement the method according to the first aspect or implement the method according to the third aspect.

According to a twelfth aspect, a computer program/program product is provided. The computer program/program product is stored in a storage medium, and the computer program/program product is executed by at least one processor to implement the steps of the measurement method according to the first aspect or the third aspect.

In the embodiments of this application, the terminal performs the first operation in the case that the first condition is met, where the first operation includes at least one of starting the first measurement, reporting the measurement result according to the first measurement result reporting configuration, and starting the conditional reconfiguration procedure, and the first condition is related to the height and/or the beam of the terminal. When the terminal meets the first condition, it represents that the terminal may be a flight terminal, the terminal is in a flight state, or the like. In this case, because occlusions are reduced, an increased number of cells provide services to the terminal. In this case, the terminal performs the first operation to start mobility measurement, so that the terminal can access a more distant cell, thereby improving mobility flexibility and communication performance of the terminal.

### BRIEF DESCRIPTION OF DRAWINGS

FIG. 1 is a block diagram of a wireless communication system according to an embodiment of this application;
FIG. 2 is a schematic flowchart 1 of a measurement method according to an embodiment of this application;
FIG. 3 is a schematic diagram 1 of a terminal and a cell according to an embodiment of this application;
FIG. 4 is a schematic diagram 2 of a terminal and a cell according to an embodiment of this application;
FIG. 5 is a schematic diagram 3 of a terminal and a cell according to an embodiment of this application;
FIG. 6 is a schematic flowchart 2 of a measurement method according to an embodiment of this application;
FIG. 7 is a schematic diagram 1 of a structure of a measurement apparatus according to an embodiment of this application;
FIG. 8 is a schematic diagram 2 of a structure of a measurement apparatus according to an embodiment of this application;
FIG. 9 is a schematic diagram of a structure of a communication device according to an embodiment of this application;
FIG. 10 is a schematic diagram of a hardware structure of a terminal according to an embodiment of this application;
FIG. 11 is a schematic diagram 1 of a structure of a network side device according to an embodiment of this application; and
FIG. 12 is a schematic diagram 2 of a structure of a network side device according to an embodiment of this application.

### DESCRIPTION OF EMBODIMENTS

The following clearly describes the technical solutions in embodiments of this application with reference to the accompanying drawings in embodiments of this application. Clearly, the described embodiments are some rather than all embodiments of this application. All other embodiments obtained by a person of ordinary skill in the art based on embodiments of this application fall within the protection scope of this application.

In the specification and claims of this application, the terms such as "first" and "second" are intended to distinguish between similar objects but not intended to describe a specific order or sequence. It should be understood that the terms used in this manner may be interchangeable in an appropriate case, so that embodiments of this application can be implemented in an order other than those illustrated or described herein. In addition, objects distinguished by "first" and "second" are usually of a same type and a quantity of objects is not limited, for example, there may be one or more first objects. In addition, in the specification and claims, "and/or" represents at least one of connected objects, and the character "/" usually represents an "or" relationship between the associated objects.

It should be noted that the technologies described in embodiments of this application are not limited to a long term evolution (Long Term Evolution, LTE)/LTE-advanced (LTE-Advanced, LTE-A) system, and may be further used in other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in embodiments of this application are often used interchangeably. The described technologies may be used in the foregoing systems and radio technologies, or may be used in another system and another radio technology. The following descriptions describe a new radio (New Radio, NR) system for an exemplary purpose, and NR terms are used in most of the following descriptions. However, these technologies may also be applied to an application other than an NR system application, for example, a 6^{th} generation (6^{th} Generation, 6G) communication system.

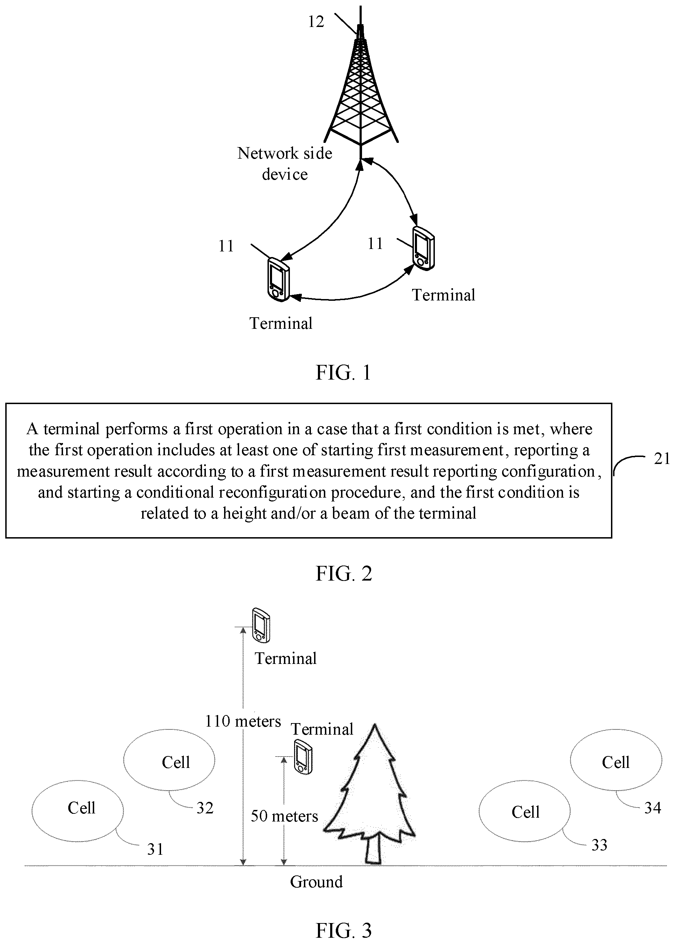

FIG. 1 is a block diagram of a wireless communication system to which an embodiment of this application is applicable. The wireless communication system includes a terminal 11 and a network side device 12. The terminal 11 may be a terminal side device such as a mobile phone, an aircraft, an unmanned aircraft, a normal mobile phone carried on an aircraft, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device with a wireless communication function, for example, a refrigerator, a television, a washing machine, or furniture), a game machine, a personal computer (personal computer, PC), a teller machine, or a self-service machine. Wearable devices include a smart watch, a smart band, a smart headset, smart glasses, smart jewelry (a smart wristlet, a smart bracelet, a smart ring, a smart necklace, a smart anklet, a smart leglet, or the like), a smart wristband, smart clothing, and the like. It should be noted that a specific type of the terminal 11 is not limited in this embodiment of this application.

The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a node B, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. The base station is not limited to a specific technical vocabulary, provided that a same technical effect is achieved. It should be noted that, in this embodiment of this application, only a base station in the NR system is used as an example for description, and a specific type of the base station is not limited. The core network device may include but is not limited to at least one of a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), and an application function (Application Function, AF). It should be noted that, in this embodiment of this application, only a core network device in the NR system is used as an example for description, and a specific type of the core network device is not limited.

With reference to the accompanying drawings, the following describes in detail measurement methods provided in embodiments of this application by using some embodiments and application scenarios thereof.

FIG. 2 is a schematic flowchart 1 of a measurement method according to an embodiment of this application. As shown in FIG. 2, the method may include the following steps.

Step 21: A terminal performs a first operation in a case that a first condition is met, where the first operation includes at least one of starting first measurement, reporting a measurement result according to a first measurement result reporting configuration, and starting a conditional reconfiguration procedure, and the first condition is related to a height and/or a beam of the terminal.

In this embodiment of this application, the terminal may be, for example, an unmanned aerial vehicle (Unmanned Aerial Vehicle, UAV). The UAV is also referred to as an unmanned aircraft, an unmanned combat air vehicle, or a honeybee-like drone. The UAV in a broad sense is a variety of remote-controlled aircraft that does not require a pilot to drive, and may be a military UAV or a civilian UAV according to application thereof.

A condition related to the height of the terminal is a height condition, and a condition related to the beam is a beam condition. In this embodiment of this application, the first condition is related to the height and/or the beam of the terminal, that is, the first condition may include the height condition and/or the beam condition.

The height condition refers to whether the height of the terminal falls within a specific range. If the height of the terminal falls within a specific range, the terminal meets the height condition. If the height of the terminal does not fall within a specific range, the terminal does not meet the height condition. The height condition may be greater than or equal to a height x, and/or less than or equal to a height y. The height may be a sea surface height, or may be based on a relative height corresponding to a specific reference point.

The beam condition may refer to whether the beam of the terminal is a preset beam, or may refer to whether a beam direction of the terminal is a preset direction. If the beam of the terminal is a preset beam or the beam direction of the terminal is a preset direction, the terminal meets the beam condition; otherwise, the terminal does not meet the beam condition. The beam of the terminal may include a transmit beam of the terminal, or may include a receive beam of the terminal.

When the terminal meets any one of the height condition and the beam condition, or meets both the height condition and the beam condition, it represents that the terminal meets the first condition. The terminal may perform the first operation in a case that the terminal meets the first condition. The first operation includes at least one of starting the first measurement, reporting the measurement result according to the first measurement result reporting configuration, and starting the conditional reconfiguration procedure.

The conditional reconfiguration procedure includes a conditional reconfiguration evaluation procedure and/or a conditional reconfiguration execution procedure.

In the case that the terminal meets the first condition, that the height of the terminal is higher than a preset height is used as an example. Because the height of the terminal is high, an increased number of cells provide services to the terminal correspondingly. In this case, the terminal starts mobility measurement, so that the terminal can access a more distant cell, thereby improving movement flexibility of the terminal. When the height of the terminal is lower than the preset height, because the height of the terminal is low, cross-link interference (Cross LinkInterference, CLI) interference increases. In this case, CLI measurement is started to detect the cross-link interference as soon as possible, thereby ensuring communication performance of the terminal.

In addition, before the height of the terminal is higher than the preset height, the terminal may perform measurement based on a pre-configured measurement configuration. However, measurement reporting is performed according to a specific measurement reporting configuration only in a case that the height of the terminal is higher than the preset height. In this way, the terminal may start measurement before the height is higher than the preset height, and an available measurement result is immediately obtained in a case that the height meets the preset height, so that reporting of the measurement result can be accelerated.

In addition, before the height of the terminal is higher than the preset height, the terminal may perform measurement based on the pre-configured measurement configuration. However, an evaluation operation is performed for a candidate target cell according to a conditional configuration parameter only in a case that the height of the terminal is higher than the preset height. In this way, conditional handover is triggered as quickly as possible in the case that the height of the terminal meets the preset height, thereby improving handover performance of the terminal.

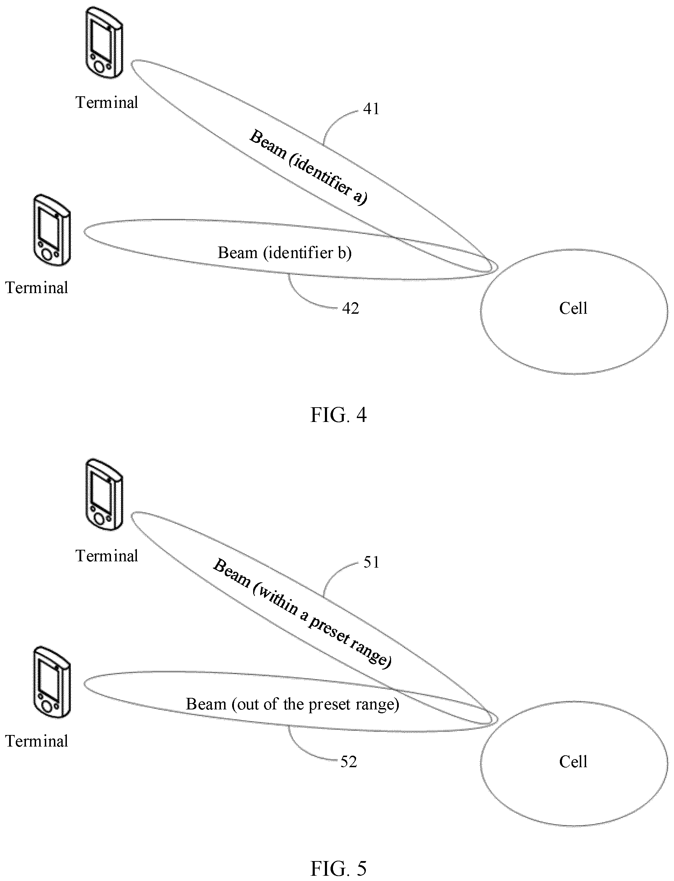

The following provides descriptions with reference to FIG. 3 to FIG. 5. FIG. 3 is a schematic diagram 1 of a terminal and a cell according to an embodiment of this application. FIG. 4 is a schematic diagram 2 of a terminal and a cell according to an embodiment of this application. FIG. 5 is a schematic diagram 3 of a terminal and a cell according to an embodiment of this application. As shown in FIG. 3 to FIG. 5, before the terminal determines whether the first condition is met, a network side device may pre-configure a first configuration for the terminal, and then send the first configuration to the terminal. The first configuration includes a parameter related to the first condition. In this embodiment of this application, the first condition includes at least one of the following condition (1) to condition (3):
Condition (1): The height of the terminal meets a preset threshold.

"The height of the terminal meets a preset threshold" may represent that the height of the terminal is greater than or equal to the preset height. For example, the preset height is 100 meters. Then, the condition (1) requires the height of the terminal to be greater than or equal to 100 meters. For example, the terminal meets the condition (1) when the height of the terminal is 110 meters, and the terminal does not meet the condition (1) when the height of the terminal is 50 meters. In this case, the parameter related to the first condition may include the preset height.

As shown in FIG. 3, when the height of the terminal is 50 meters, only a cell 31 and a cell 32 may provide services to the terminal due to a reason such as occlusion caused by an obstacle. When the height of the terminal is higher than 100 meters, a cell 33 and a cell 34 may also provide services to the terminal because there is no occlusion caused by the obstacle. Therefore, the network side device may pre-configure measurement configurations corresponding to the cell 33 and the cell 34 for the terminal. When the height of the terminal is higher than 100 meters, the terminal directly starts measurement for the cell 33 and the cell 34.

"The height of the terminal meets a preset threshold" may alternatively represent that the height of the terminal is within a preset height range. For example, the preset height range is 100 meters to 200 meters. Then, the condition (1) requires the height of the terminal to be within the height range of 100 meters to 200 meters. For example, the terminal meets the condition (1) when the height of the terminal is 110 meters, and the terminal does not meet the condition (1) when the height of the terminal is 250 meters. In this case, the parameter related to the first condition may include the preset height range.

Condition (2): A beam identifier of the terminal is a preset beam identifier.

The beam identifier is used to distinguish between different beams, and beam identifiers of different beams are different. In this embodiment of this application, the beam of the terminal may be a transmit beam of the terminal or a receive beam of the terminal. The preset beam identifier represents a preset beam. "A beam identifier of the terminal is a preset beam identifier" represents that the beam of the terminal is a preset beam. The transmit beam of the terminal may be a preset beam or the receive beam of the terminal may be a preset beam.

For example, if an identifier of the transmit beam of the terminal is an identifier a, and the preset beam identifier includes the identifier a, the terminal meets the condition (2); otherwise, the terminal does not meet the condition (2). In this case, the parameter related to the first condition may include the preset beam identifier.

As shown in FIG. 4, the preset beam identifier is an identifier a, and the identifier a corresponds to a beam 41. The terminal meets the condition (2) when the transmit beam and/or the receive beam of the terminal is the beam 41. When the transmit beam and/or the receive beam of the terminal is a beam 42, an identifier of the beam 42 is an identifier b, which is not the preset beam identifier, and therefore, the terminal does not meet the condition (2).

Condition (3): A beam direction angle of the terminal is within a preset range.

The beam direction angle is used to represent a direction of the beam. Similarly, in this embodiment of this application, the beam of the terminal may be a transmit beam of the terminal or a receive beam of the terminal. Correspondingly, "a beam direction angle of the terminal is within a preset range" may be that a direction angle of the transmit beam of the terminal is within the preset range, or may be that a direction angle of the receive beam of the terminal is within the preset range. When the direction angle of the transmit beam and/or the direction angle of the receive beam of the terminal is within the preset range, the terminal meets the condition (3); otherwise, the terminal does not meet the condition (3). In this case, the parameter related to the first condition may include the preset range. The beam may also include a directional antenna, a main lobe direction of a directional antenna, a side lobe direction of a directional antenna, or a rear lobe direction of a directional antenna.

As shown in FIG. 5, a direction angle of a beam 51 is within the preset range, and a direction angle of a beam 52 is out of the preset range. When the transmit beam and/or the receive beam of the terminal is the beam 51, the terminal meets the condition (3); and when the transmit beam and/or the receive beam of the terminal is the beam 52, the terminal does not meet the condition (3).

As described above, the first condition includes at least one of the foregoing condition (1) to condition (3), and the parameter related to the first condition may include at least one of the preset threshold, the preset beam identifier, and the preset range. When the terminal meets at least one of the condition (1) to the condition (3), it is determined that the terminal meets the first condition; otherwise, it is determined that the terminal does not meet the first condition.

In addition to the parameter related to the first condition, the first configuration may further include at least one of a measurement configuration corresponding to the first measurement, the first measurement result reporting configuration, and a conditional reconfiguration parameter corresponding to the conditional reconfiguration procedure. When the first configuration includes the measurement configuration corresponding to the first measurement, the terminal may start the first measurement according to the measurement configuration corresponding to the first measurement, to obtain the measurement result corresponding to the first measurement. When the first configuration includes the first measurement result reporting configuration, the terminal may report the measurement result according to the first measurement result reporting configuration. When the first configuration includes the conditional reconfiguration parameter, the terminal may start the conditional reconfiguration procedure according to the conditional reconfiguration parameter.

When configuring the measurement configuration or a conditional handover (Conditional handover, CHO) configuration, a network may learn, according to a capability of the terminal, that the terminal is a flight terminal, so that the solution in this embodiment of this application can be executed when configuration is performed. Specifically, the terminal sends terminal capability information to a network side device, where the terminal capability information indicates at least one of:
(1) That the terminal supports flight. "That the terminal supports flight" represents that the terminal may be a UAV. Therefore, the network side device performs configuration according to the terminal capability information, so that the terminal can perform the foregoing measurement method according to the first configuration.
(2) A height range supported by the terminal. According to the height range supported by the terminal, the network side device may configure the parameter related to the first condition, for example, configure "perform the first operation when the height of the terminal is within the height range supported by the terminal".
(3) That the terminal supports a directional antenna or a beam. According to "that the terminal supports a directional antenna or a beam", the network side device may learn that the terminal is a UAV, and perform configuration based on the directional antenna or the beam supported by the terminal. For example, the network side device configures "perform the first operation when the beam identifier of the terminal is the preset beam identifier".
(4) A beam range or an antenna direction supported by the terminal. According to the beam range or the antenna direction supported by the terminal, the network side device may learn that the terminal is a UAV, and perform configuration based on the beam range or the antenna direction supported by the terminal. For example, the network side device configures "perform the first operation when the beam direction angle of the terminal is within the preset range".
(5) That the terminal supports performing the first operation when the first condition is met. The terminal capability information may alternatively directly indicate that the terminal supports performing the first operation when the first condition is met.

In addition, the UAV usually has path planning and knows a flight track thereof. Therefore, the UAV may request, in advance, the network side device to configure a measurement configuration for a remote cell, and configure corresponding measurement execution condition, measurement result reporting condition, and conditional handover evaluation condition. Subsequently, according to a change of the flight track, the UAV may further request the network side to delete a corresponding measurement configuration or a CHO configuration of the candidate target cell.

Specifically, the terminal may send a first request to the network side device, where the first request is used to request the network side device to send all or some information of the first configuration, that is, the first request is used to request the network side device to send at least one of the parameter related to the first condition, the measurement configuration corresponding to the first measurement, the first measurement result reporting configuration, and the conditional reconfiguration parameter corresponding to the conditional reconfiguration procedure. After receiving the first request, the network side device may configure related information according to the first request, to send the first configuration to the terminal.

Optionally, the first request further includes information that is expected by the terminal to be configured in the first configuration. The information that is expected by the terminal to be configured in the first configuration may include at least one of the parameter related to the first condition, the measurement configuration corresponding to the first measurement, the first measurement result reporting configuration, and the conditional reconfiguration parameter corresponding to the conditional reconfiguration procedure. The network side device may perform configuration according to the information that is expected by the terminal to be configured in the first configuration.

Optionally, before the terminal sends the first request to the network side device, the network side device sends first enabling information to the terminal, where the first enabling information indicates whether the terminal is allowed to send the first request. If the first enabling information indicates that the terminal is allowed to send the first request, the terminal sends the first request to the network side device; or if the first enabling information indicates that the terminal is not allowed to send the first request, the terminal does not send the first request to the network side device.

In a case that the flight track changes, the terminal may send a second request to the network side device, where the second request is used to request the network side device to delete all or some information of the first configuration, that is, the second request is used to request the network side device to delete at least one of the parameter related to the first condition, the measurement configuration corresponding to the first measurement, the first measurement result reporting configuration, and the conditional reconfiguration parameter corresponding to the conditional reconfiguration procedure. After receiving the second request, the network side device may delete related information according to the second request.

Optionally, before the terminal sends the second request to the network side device, the network side device sends second enabling information to the terminal, where the second enabling information indicates whether the terminal is allowed to send the second request. If the second enabling information indicates that the terminal is allowed to send the second request, the terminal sends the second request to the network side device; or if the second enabling information indicates that the terminal is not allowed to send the second request, the terminal does not send the second request to the network side device.

Optionally, the first enabling information and the second enabling information may be the same or different.

The foregoing processes are described in detail below.

Both the first measurement and reporting of the measurement result according to the first measurement result reporting configuration are operations related to radio resource management (Radio Resource Management, RRM) measurement. The following first describes the RRM measurement.

In the RRM measurement, the terminal measures a reference signal of a neighboring cell, and reports a measurement result to the network side device to determine whether to perform cell handover.

In new radio (New Radio, NR), a measurement behavior is defined by using a measurement object (Measurement Objects, MO), a measurement reporting configuration (Reporting Configurations), and a measurement identity (Measurement Identities, ID).

The MO defines what reference signal the terminal measures and a time-frequency domain location of the reference signal. For inter-frequency (Inter-Frequency) measurement and intra-frequency (Intra-Frequency) measurement, an MO indicates a time-frequency domain location and a subcarrier spacing of a to-be-measured reference signal, and a cell-specific (Cell-specific) offset (Offset) and a black and white cell list may be configured for the MO. An MO includes only one frequency in long term evolution (Long Term Evolution, LTE). In NR, an MO may have a frequency of a synchronization signal and PBCH block (Synchronization Signal and PBCH block, SSB) and a plurality of channel state information-reference signal (Channel State Information-Reference Signal, CSI-RS) resources.

The measurement reporting configuration defines what the terminal reports in what case. An MO may be associated with one or more measurement reporting configurations. The measurement reporting configuration includes the following parameters:
Parameter 1 - reporting criterion (Reporting Criterion): A criterion for triggering reporting of the terminal may be periodic reporting or may be a series of event triggering rules.
Parameter 2 - reference signal type (RS Type): a reference signal type (SSB or CSI-RS) used as beam or cell quality measurement.
Parameter 3 - measurement reporting format (Reporting Format): The measurement reporting format indicates, for example, a maximum quantity of cells and a maximum quantity of beams that are reported.

The measurement ID is an identity of a specific measurement behavior of the terminal, and is used to be associated with a specific MO and a measurement reporting configuration. In current NR, a measurement ID is associated with a measurement object ID and a reporting configuration ID, supports association between a plurality of MOs and one measurement reporting configuration, and supports association between a plurality of measurement reporting configurations and one MO.

Based on the foregoing content, the solutions in this embodiment of this application are described.

In an implementation, the terminal may start the first measurement in the case that the first condition is met, where the first measurement includes at least one of measurement for a first MO, measurement for a first reference signal, measurement for a first beam, measurement for a first cell, measurement for a first radio access technology (Radio Access Technology, RAT), measurement for a first frequency, measurement performed based on a first synchronization signal and PBCH block measurement timing configuration (SSB Measurement Timing Configuration, SMTC), measurement performed based on a first received signal strength indicator measurement timing configuration (RSSI Measurement Timing Configuration, RMTC), and CLI measurement. The CLI measurement enables the terminal to detect existing interference as soon as possible. Optionally, the terminal may start the CLI measurement in the case that the first condition is met, and may stop the CLI measurement in a case that the first condition is not met. For example, the terminal starts the CLI measurement when a flight height is lower than the preset threshold, so that the existing interference can be detected, thereby reducing interference to the terminal, or reducing interference from the terminal to another terminal. The CLI measurement is stopped when the flight height is higher than the preset threshold, which helps reduce power consumption of the terminal, thereby achieving an objective of saving power.

The foregoing "first" may indicate one or more objects. The first MO is used as an example, and the measurement for the first MO may include measurement for MO1 and measurement for MO2. The first cell is used as an example, and measurement for the first cell may include measurement for a specific cell list.

In an implementation, the terminal may report the measurement result according to the first measurement result reporting configuration in the case that the first condition is met. Specifically, in a case that a reporting condition configured in the first measurement result reporting configuration is met, the terminal sends the measurement result to the network side device, where the first measurement result reporting configuration is associated with a target object, and the target object includes at least one of a second MO, a second reference signal, a second beam, a second cell, a second RAT, a second frequency, a second SMTC, a second RMTC, and CLI. The reported measurement result is a result of measuring the target object.

The first MO and the second MO may be the same or different. The first reference signal and the second reference signal may be the same or different. The first beam and the second beam may be the same or different. The first cell and the second cell may be the same or different. The first RAT and the second RAT may be the same or different. The first frequency and the second frequency may be the same or different. The first SMTC and the second SMTC may be the same or different. The first RMTC and the second RMTC may be the same or different. The following provides descriptions with reference to several specific examples.

Example 1: The terminal receives the first configuration sent by the network side device, where the first configuration includes the parameter related to the first condition, and further includes a measurement ID, a measurement object corresponding to the measurement ID, a reporting configuration corresponding to the measurement ID, and a first condition corresponding to the measurement ID. The first condition includes at least one of the following: The height of the terminal meets the preset threshold; the beam identity of the terminal is the preset beam identifier; and the beam direction angle of the terminal is within the preset range.

When the terminal meets the first condition, the terminal starts measurement for the measurement object corresponding to the measurement ID, and reports a measurement result according to the reporting configuration corresponding to the measurement ID. In this implementation, the first operation performed by the terminal includes starting the first measurement, and may further include reporting the measurement result according to the first measurement result reporting configuration. In this case, the first measurement result reporting configuration is the reporting configuration corresponding to the measurement ID.

If the first measurement is the measurement for the first MO, the first measurement result reporting configuration may be associated with the first MO. If the first measurement is the measurement for the first reference signal, the first measurement result reporting configuration may be associated with the first reference signal. If the first measurement is the measurement for the first beam, the first measurement result reporting configuration may be associated with the first reference signal. If the first measurement is the measurement for the first cell, the first measurement result reporting configuration may be associated with the first cell. If the first measurement is the measurement for the first RAT, the first measurement result reporting configuration may be associated with the first RAT. If the first measurement is the measurement for the first frequency, the first measurement result reporting configuration may be associated with the first RAT. If the first measurement is the measurement performed based on the first SMTC, the first measurement result reporting configuration may be associated with the first SMTC. If the first measurement is the measurement performed based on the first RMTC, the first measurement result reporting configuration may be associated with the first RMTC. If the first measurement is the CLI measurement, the first measurement result reporting configuration may be associated with CLI.

After starting the first measurement, the terminal may obtain the measurement result corresponding to the first measurement, and then report the measurement result corresponding to the first measurement to the network side device in a case that a reporting condition in the reporting configuration corresponding to the measurement ID is met.

When the terminal does not meet the first condition, the terminal may stop the first measurement. Specifically, the terminal stops measuring the measurement object corresponding to the measurement ID, and deletes the measurement result corresponding to the first measurement. Further, the terminal may further stop reporting the measurement result according to the first measurement result reporting configuration.

In Example 1, after receiving the first configuration, the terminal starts the first measurement only in the case that the first condition is met, thereby reducing power consumption of the terminal.

Example 2: The terminal receives the first configuration sent by the network side device, where the first configuration includes the parameter related to the first condition, and further includes a reporting configuration ID and a first condition corresponding to the reporting configuration ID. The first condition includes at least one of the following: The height of the terminal meets the preset threshold; the beam identity of the terminal is the preset beam identifier; and the beam direction angle of the terminal is within the preset range.

When the terminal meets the first condition, the terminal reports a related measurement result according to an indication in the reporting configuration ID, where the reporting configuration ID corresponds to the first measurement result reporting configuration. Specifically, after receiving the first configuration sent by the network side device, the terminal may start second measurement to obtain a measurement result corresponding to the second measurement. Then, the terminal reports the measurement result corresponding to the second measurement according to the first measurement result reporting configuration in the case that the first condition is met. The second measurement may be the same as or different from the first measurement. If the second measurement is the measurement for the second MO, the first measurement result reporting configuration may be associated with the second MO. If the second measurement is the measurement for the second reference signal, the first measurement result reporting configuration may be associated with the second reference signal. If the second measurement is the measurement for the second beam, the second measurement result reporting configuration may be associated with the second reference signal. If the second measurement is the measurement for the second cell, the first measurement result reporting configuration may be associated with the second cell. If the second measurement is the measurement for the second RAT, the first measurement result reporting configuration may be associated with the second RAT. If the second measurement is the measurement for the second frequency, the first measurement result reporting configuration may be associated with the second RAT. If the second measurement is the measurement performed based on the second SMTC, the first measurement result reporting configuration may be associated with the second SMTC. If the second measurement is the measurement performed based on the second RMTC, the first measurement result reporting configuration may be associated with the second RMTC. If the second measurement is the CLI measurement, the first measurement result reporting configuration may be associated with CLI. Then, the measurement result of the target object associated with the first measurement result reporting configuration is reported to the network side device.

When the terminal does not meet the first condition, the terminal does not report the related measurement result according to the indication in the reporting configuration ID. Specifically, in the case that the terminal does not meet the first condition, the terminal may stop the second measurement, stop reporting the measurement result according to the first measurement result reporting configuration, and may further delete the measurement result corresponding to the second measurement.

In Example 2, after the terminal receives the first configuration, the terminal may perform related measurement before meeting the first condition, and report the related measurement result to the network side device in the case that the first condition is met. Compared with Example 1, in the implementation solution in Example 2, the related measurement result may be immediately reported in the case that the terminal meets the first condition, so that the network side device more quickly determines, according to the reported measurement result, whether to perform cell handover.

Example 3: The terminal receives the first configuration sent by the network side device, where the first configuration includes the parameter related to the first condition, and further includes a measurement object. The measurement object includes a first cell list and a first condition corresponding to the first cell list. The first condition includes at least one of the following: The height of the terminal meets the preset threshold; the beam identity of the terminal is the preset beam identifier; and the beam direction angle of the terminal is within the preset range.

When the terminal meets the first condition, the terminal starts measurement for cells in the first cell list to obtain cell measurement results. When meeting a reporting condition corresponding to a reporting configuration, the terminal may report the cell measurement results to the network side device.

When the terminal does not meet the first condition, the terminal stops measuring the cells in the first cell list, and may further delete the cell measurement results.

In the foregoing embodiment, with reference to Example 1 to Example 3, solutions in which the terminal performs the RRM measurement in the case that the first condition is met are described. The following describes a solution in which the terminal performs CHO in the case that the first condition is met.

First, CHO is introduced briefly. CHO is handover performed by the terminal when one or more predefined handover execution conditions are met, and one execution condition includes one or two trigger conditions (CHO event A3/A5). Main steps of CHO are as follows:
Step 1: When determining to use CHO, a source base station sends a handover request message to one or more candidate base stations to request to configure a plurality of candidate target cells.
Step 2: The source base station receives a handover request response message that includes configuration information of one or more candidate target cells. Each candidate target cell has a corresponding radio resource control (Radio Resource Control, RRC) reconfiguration message.
Step 3: The source base station sends an RRC reconfiguration message including a CHO configuration to the terminal, where the CHO configuration includes the configuration information of the candidate target cell and a CHO execution condition configured by the source base station.
Step 4: After receiving the CHO configuration, the terminal sends an RRC reconfiguration complete message to the source base station, and starts to perform evaluation for the CHO execution condition.
Step 5: If candidate target cells that meet the execution condition occur, the terminal selects one of the candidate target cells as a target cell, and performs conditional handover on the target cell. Specifically, the terminal initiates random access on the cell by using the RRC reconfiguration message of the target cell, and sends a reconfiguration complete message to the target cell. Starting from a moment at which the terminal starts to establish synchronization with the target cell, the terminal stops monitoring a source cell. After performing handover, the terminal stops condition evaluation and releases the CHO configuration.
Step 6: A target base station notifies the source base station that the terminal completes handover successfully.
Step 7: The source base station notifies other candidate base stations of handover cancellation.

Based on the foregoing content, the solutions in this embodiment of this application are described. The terminal may start the conditional reconfiguration procedure in the case that the first condition is met.

Specifically, the terminal receives the first configuration sent by the network side device, where the first configuration includes the parameter related to the first condition, and further includes the conditional reconfiguration parameter corresponding to the conditional reconfiguration procedure. The conditional reconfiguration parameter may include, for example, conditional handover configurations of a plurality of candidate target cells and an evaluation condition of each candidate target cell. The first condition includes at least one of the following: The height of the terminal meets the preset threshold; the beam identity of the terminal is the preset beam identifier; and the beam direction angle of the terminal is within the preset range.

When the terminal meets the first condition, the terminal starts the conditional reconfiguration procedure, that is, starts evaluation on an associated candidate target cell. In this embodiment of this application, the parameter related to the first condition may be associated with a plurality of candidate target cells or may be associated with one candidate target cell. The preset threshold in the parameter related to the first condition is used as an example. If the preset threshold is associated with a plurality of candidate target cells, when the height of the terminal meets the preset threshold, the terminal starts the conditional reconfiguration procedure for the plurality of candidate target cells. If the preset threshold includes a first preset threshold and a second preset threshold, when the height of the terminal meets the first preset threshold, the terminal starts the conditional reconfiguration procedure for a candidate target cell associated with the first preset threshold, and when the height of the terminal meets the second preset threshold, the terminal starts the conditional reconfiguration procedure for a candidate target cell associated with the second preset threshold.

For example, the terminal starts evaluation for any candidate target cell. In the case that the terminal meets the first condition, the terminal determines whether a handover condition of the candidate target cell is met. If the handover condition of the candidate target cell is met, the candidate target cell may be used as a target cell, and the terminal hands over to the target cell; or if the handover condition of the candidate target cell is not met, the terminal does not perform handover.

When the terminal does not meet the first condition, the terminal stops the conditional reconfiguration procedure for the candidate target cell.

Further, because a dedicated random access resource of the candidate target cell is configured for the terminal in the CHO configuration, if the terminal never hands over to a remote cell, resources on the network side are also wasted. Therefore, in a case that the terminal starts corresponding measurement, the terminal may indicate the network side that the terminal has started the corresponding measurement.

Specifically, the terminal sends first information to a network side device in a case that the terminal starts the first measurement or the conditional reconfiguration evaluation, where the first information indicates that the terminal has started the first measurement or the conditional reconfiguration evaluation. Optionally, the first information further includes height information and/or beam information of the terminal. The height information is the height at which the terminal is located, and the beam information may include a beam identifier of a transmit beam and/or a receive beam of the terminal, or may include a beam direction angle of a transmit beam and/or a receive beam of the terminal.

Because the terminal may indicate, by using the first information, that the first measurement or the conditional reconfiguration evaluation has been started, the network side device may learn, according to the first information, a time period in which the terminal has started the first measurement or the conditional reconfiguration evaluation, and a time period in which the terminal does not start the first measurement or the conditional reconfiguration evaluation. In a case that the terminal does not start the first measurement or the conditional reconfiguration evaluation, the network side device may allocate these resources to another terminal, thereby reducing resource waste.

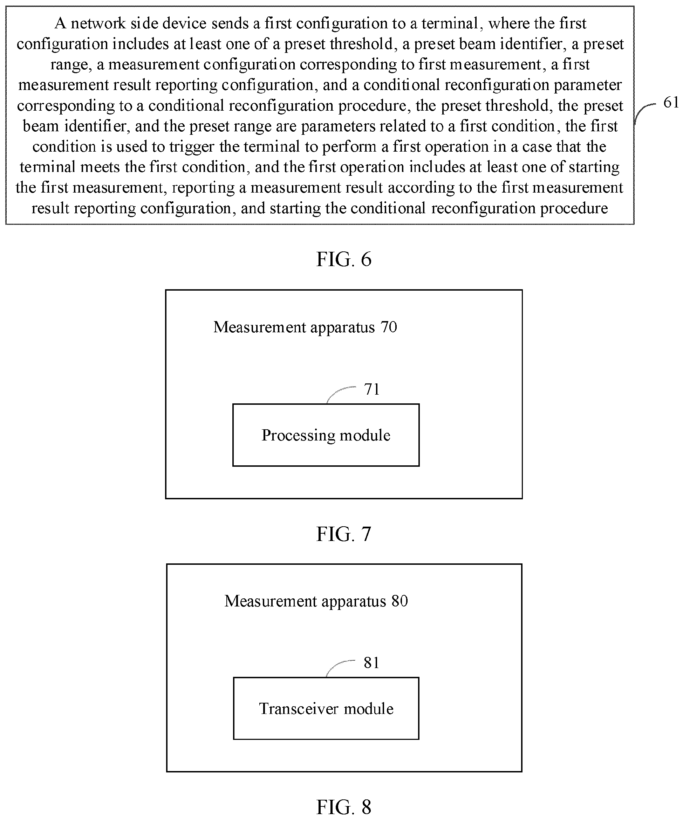

FIG. 6 is a schematic flowchart 2 of a measurement method according to an embodiment of this application. As shown in FIG. 6, the method includes the following steps.

Step 61: A network side device sends a first configuration to a terminal, where the first configuration includes at least one of:
a preset threshold;
a preset beam identifier;
a preset range;
a measurement configuration corresponding to first measurement;
a first measurement result reporting configuration; and
a conditional reconfiguration parameter corresponding to a conditional reconfiguration procedure.

The preset threshold, the preset beam identifier, and the preset range are parameters related to a first condition, the first condition is used to trigger the terminal to perform a first operation in a case that the terminal meets the first condition, and the first operation includes at least one of:
starting the first measurement;
reporting a measurement result according to the first measurement result reporting configuration; and
starting the conditional reconfiguration procedure.

Optionally, the first condition includes at least one of the following:
a height of the terminal meets the preset threshold;
a beam identifier of the terminal is the preset beam identifier; and
a beam direction angle of the terminal is within the preset range.

Optionally, the first measurement includes at least one of:
measurement for a first MO;
measurement for a first reference signal;
measurement for a first beam;
measurement for a first cell;
measurement for a first RAT;
measurement for a first frequency;
measurement performed based on a first SMTC;
measurement performed based on a first RMTC; and
CLI measurement.

Optionally, the measurement result is a result of processing a target object associated with the first measurement result reporting configuration, and the target object includes at least one of:
a second MO;
a second reference signal;
a second beam;
a second cell;
a second RAT;
a second frequency;
a second SMTC;
a second RMTC; and
CLI.

Optionally, the method further includes:

The network side device receives terminal capability information from the terminal, where the terminal capability information indicates at least one of:
that the terminal supports flight;
a height range supported by the terminal;
that the terminal supports a directional antenna or a beam;
a beam range or an antenna direction supported by the terminal; and
that the terminal supports performing the first operation when the first condition is met.

Optionally, the method further includes:
The network side device receives a first request from the terminal, where the first request is used to request the network side device to send all or some information of the first configuration.

Optionally, the first request further includes information that is expected by the terminal to be configured in the first configuration.

Optionally, the method further includes:
The network side device sends first enabling information to the terminal, where the first enabling information indicates whether the terminal is allowed to send the first request.

Optionally, the method further includes:
The network side device receives a second request from the terminal, where the second request is used to request the network side device to delete all or some information of the first configuration.

Optionally, the method further includes:
The network side device sends second enabling information to the terminal, where the second enabling information indicates whether the terminal is allowed to send the second request.

Optionally, the method further includes:
The network side device receives first information, where the first information indicates that the terminal has started the first measurement or the conditional reconfiguration evaluation.

Optionally, the first information further includes at least one of:
height information of the terminal; and
beam information of the terminal.

A specific implementation process and technical effects of the method in this embodiment are the same as those in the method embodiment on the terminal side. For details, refer to the detailed description in the method embodiment on the terminal side. Details are not described herein again.

The measurement method provided in this embodiment of this application may be executed by a measurement apparatus. In an embodiment of this application, a measurement apparatus provided in this embodiment of this application is described with an example in which the measurement apparatus performs the measurement method.

FIG. 7 is a schematic diagram 1 of a structure of a measurement apparatus according to an embodiment of this application. The measurement apparatus 70 is applied to a terminal. As shown in FIG. 7, the measurement apparatus includes:
a processing module 71, configured to perform a first operation in a case that a first condition is met, where the first operation includes at least one of:
starting first measurement;
reporting a measurement result according to a first measurement result reporting configuration; and
starting a conditional reconfiguration procedure.

The first condition is related to a height and/or a beam of the terminal.

Optionally, the first condition includes at least one of the following:
the height of the terminal meets a preset threshold;
a beam identifier of the terminal is a preset beam identifier; and
a beam direction angle of the terminal is within a preset range.

Optionally, the first measurement includes at least one of:
measurement for a first MO;
measurement for a first reference signal;
measurement for a first beam;
measurement for a first cell;
measurement for a first RAT;
measurement for a first frequency;
measurement performed based on a first SMTC;
measurement performed based on a first RMTC; and
CLI measurement.

Optionally, the measurement result is a result of processing a target object associated with the first measurement result reporting configuration, and the target object includes at least one of:
a second MO;
a second reference signal;
a second beam;
a second cell;
a second RAT;
a second frequency;
a second SMTC;
a second RMTC; and
CLI.

Optionally, the measurement apparatus further includes a transceiver module, and the transceiver module is configured to:
receive a first configuration from a network side device, where the first configuration includes at least one of:
the preset threshold;
the preset beam identifier;
the preset range;
a measurement configuration corresponding to the first measurement;
the first measurement result reporting configuration; and
a conditional reconfiguration parameter corresponding to the conditional reconfiguration procedure.

Optionally, the transceiver module is further configured to:
send terminal capability information to a network side device, where the terminal capability information indicates at least one of:
that the terminal supports flight;
a height range supported by the terminal;
that the terminal supports a directional antenna or a beam;
a beam range or an antenna direction supported by the terminal; and
that the terminal supports performing the first operation when the first condition is met.

Optionally, the transceiver module is further configured to:
send a first request to the network side device, where the first request is used to request the network side device to send all or some information of the first configuration.

Optionally, the first request further includes information that is expected by the terminal to be configured in the first configuration.

Optionally, the transceiver module is further configured to:
receive first enabling information, where the first enabling information indicates whether the terminal is allowed to send the first request.

Optionally, the transceiver module is further configured to:
send a second request to the network side device, where the second request is used to request the network side device to delete all or some information of the first configuration.

Optionally, the transceiver module is further configured to:
receive second enabling information, where the second enabling information indicates whether the terminal is allowed to send the second request.

Optionally, in a case that the terminal does not meet the first condition, the processing module 71 is further configured to perform at least one of:
stopping the first measurement by the terminal;
deleting the measurement result corresponding to the first measurement by the terminal;
stopping reporting the measurement result according to the first measurement result reporting configuration by the terminal; and
stopping the conditional reconfiguration procedure by the terminal.

Optionally, the processing module 71 is further configured to:
send first information to a network side device in a case that the terminal starts the first measurement or the conditional reconfiguration evaluation, where the first information indicates that the terminal has started the first measurement or the conditional reconfiguration evaluation.

Optionally, the first information further includes at least one of:
height information of the terminal; and
beam information of the terminal.

The apparatus in this embodiment may be configured to perform the method in any embodiment of the method embodiment on the terminal side. A specific implementation process and technical effects of the apparatus are similar to those in the method embodiment on the terminal side. For details, refer to the detailed description in the method embodiment on the terminal side. Details are not described herein again.

FIG. 8 is a schematic diagram 2 of a structure of a measurement apparatus according to an embodiment of this application. The measurement apparatus 80 is applied to a network side device. As shown in FIG. 8, the measurement apparatus includes:
a transceiver module 81, configured to send a first configuration to a terminal, where the first configuration includes at least one of:
a preset threshold;
a preset beam identifier;
a preset range;
a measurement configuration corresponding to first measurement;
a first measurement result reporting configuration; and
a conditional reconfiguration parameter corresponding to a conditional reconfiguration procedure.

The preset threshold, the preset beam identifier, and the preset range are parameters related to a first condition, the first condition is used to trigger the terminal to perform a first operation in a case that the terminal meets the first condition, and the first operation includes at least one of:
starting the first measurement;
reporting a measurement result according to the first measurement result reporting configuration; and
starting the conditional reconfiguration procedure.

Optionally, the first condition includes at least one of the following:
a height of the terminal meets the preset threshold;
a beam identifier of the terminal is the preset beam identifier; and
a beam direction angle of the terminal is within the preset range.

Optionally, the first measurement includes at least one of:
measurement for a first MO;
measurement for a first reference signal;
measurement for a first beam;
measurement for a first cell;
measurement for a first RAT;
measurement for a first frequency;
measurement performed based on a first SMTC;
measurement performed based on a first RMTC; and
CLI measurement.

Optionally, the measurement result is a result of processing a target object associated with the first measurement result reporting configuration, and the target object includes at least one of:
a second MO;
a second reference signal;
a second beam;
a second cell;
a second RAT;
a second frequency;
a second SMTC;
a second RMTC; and
CLI.

Optionally, the transceiver module 81 is further configured to:
receive terminal capability information from the terminal, where the terminal capability information indicates at least one of:
that the terminal supports flight;
a height range supported by the terminal;
that the terminal supports a directional antenna or a beam;
a beam range or an antenna direction supported by the terminal; and
that the terminal supports performing the first operation when the first condition is met.

Optionally, the transceiver module 81 is further configured to:
receive a first request from the terminal, where the first request is used to request the network side device to send all or some information of the first configuration.

Optionally, the first request further includes information that is expected by the terminal to be configured in the first configuration.

Optionally, the transceiver module 81 is further configured to:
send first enabling information to the terminal, where the first enabling information indicates whether the terminal is allowed to send the first request.

Optionally, the transceiver module 81 is further configured to:
receive a second request from the terminal, where the second request is used to request the network side device to delete all or some information of the first configuration.

Optionally, the transceiver module 81 is further configured to:
send second enabling information to the terminal, where the second enabling information indicates whether the terminal is allowed to send the second request.

Optionally, the transceiver module 81 is further configured to:
receive first information, where the first information indicates that the terminal has started the first measurement or the conditional reconfiguration evaluation.

Optionally, the first information further includes at least one of:
height information of the terminal; and
beam information of the terminal.

The apparatus in this embodiment may be configured to perform the method in any embodiment of the method embodiment of the network side device. A specific implementation process and technical effects of the apparatus are similar to those in the method embodiment of the network side device. For details, refer to the detailed description in the method embodiment of the network side device. Details are not described herein again.

The measurement apparatus in this embodiment of this application may be an electronic device, for example, an electronic device with an operating system, or may be a component in an electronic device, for example, an integrated circuit or a chip. The electronic device may be a terminal, or may be another device other than the terminal. For example, the terminal may include but is not limited to the type of the foregoing listed terminal 11, and the another device may be a server, a network attached storage (Network Attached Storage, NAS), or the like. This is not specifically limited in this embodiment of this application.

The measurement apparatuses provided in embodiments of this application can implement the processes implemented in the method embodiments of FIG. 2 to FIG. 6, and achieve the same technical effects. To avoid repetition, details are not described herein again.

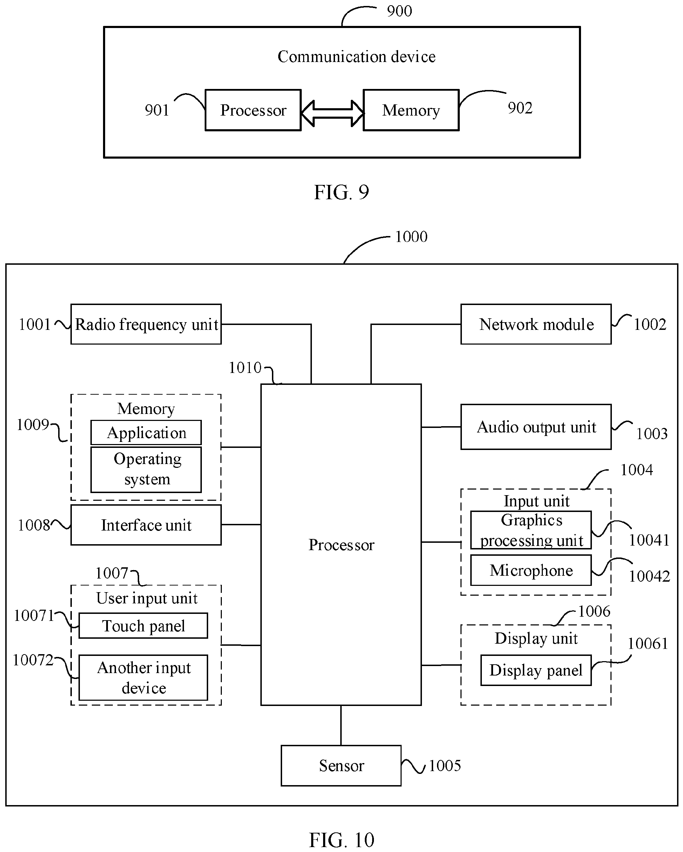

Optionally, as shown in FIG. 9, an embodiment of this application further provides a communication device 900, including a processor 901 and a memory 902. The memory 902 stores a program or instructions that can be run on the processor 901. For example, when the communication device 900 is a terminal, the steps of the foregoing measurement method embodiment are implemented when the program or the instructions are executed by the processor 901, and the same technical effects can be achieved. When the communication device 900 is a network side device, the steps of the foregoing measurement method embodiment are implemented when the program or the instructions are executed by the processor 901, and the same technical effects can be achieved. To avoid repetition, details are not described herein again.

An embodiment of this application further provides a terminal, including a processor and a communication interface. The processor is configured to perform a first operation in a case that a first condition is met, where the first operation includes at least one of starting first measurement, reporting a measurement result according to a first measurement result reporting configuration, and starting a conditional reconfiguration procedure, and the first condition is related to a height and/or a beam of the terminal. This terminal embodiment corresponds to the foregoing method embodiment on the terminal side. The implementation processes and implementations of the foregoing method embodiment are all applicable to this terminal embodiment, and the same technical effects can be achieved. Specifically, FIG. 10 is a schematic diagram of a hardware structure of a terminal according to an embodiment of this application.

The terminal 1000 includes but is not limited to at least some components in a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

A person skilled in the art may understand that the terminal 1000 may further include a power supply (for example, a battery) that supplies power to the components. The power supply may be logically connected to the processor 1010 by using a power management system, to implement functions such as charging, discharging, and power consumption management by using the power management system. The terminal structure shown in FIG. 10 does not constitute a limitation on the terminal. The terminal may include more or fewer components than those shown in the figure, or combine some components, or different component arrangements. Details are not described herein again.

It should be understood that, in this embodiment of this application, the input unit 1004 may include a graphics processing unit (Graphics Processing Unit, GPU) 10041 and a microphone 10042. The graphics processing unit 10041 processes image data of a still picture or a video obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include a touch detection apparatus and a touch controller. The another input device 10072 may include but is not limited to a physical keyboard, a function key (for example, a volume control key or a power-on/off key), a trackball, a mouse, or a joy stick. Details are not described herein again.

In this embodiment of this application, after receiving downlink data from a network side device, the radio frequency unit 1001 may transmit the downlink data to the processor 1010 for processing. In addition, the radio frequency unit 1001 may send uplink data to the network side device. Usually, the radio frequency unit 1001 includes but is not limited to an antenna, an amplifier, a transceiver, a coupler, a low-noise amplifier, a duplexer, or the like.

The memory 1009 may be configured to store a software program or instructions and various types of data. The memory 1009 may mainly include a first storage area for storing a program or instructions and a second storage area for storing data, where the first storage area may store an operating system, an application or instructions required by at least one function (for example, a sound play function or an image play function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in this embodiment of this application includes but is not limited to these memories and any other suitable type of memory.

The processor 1010 may include one or more processing units. Optionally, the processor 1010 integrates an application processor and a modem processor, where the application processor mainly processes operations related to an operating system, a user interface, an application, and the like, and the modem processor mainly processes a wireless communication signal, for example, a baseband processor. It can be understood that the modem processor may alternatively not be integrated into the processor 1010.

The processor 1010 is configured to perform a first operation in a case that a first condition is met, where the first operation includes at least one of:
starting first measurement;
reporting a measurement result according to a first measurement result reporting configuration; and
starting a conditional reconfiguration procedure.

The first condition is related to a height and/or a beam of a terminal.

Optionally, the first condition includes at least one of the following:
the height of the terminal meets a preset threshold;
a beam identifier of the terminal is a preset beam identifier; and
a beam direction angle of the terminal is within a preset range.

Optionally, the first measurement includes at least one of:
measurement for a first measurement object MO;
measurement for a first reference signal;
measurement for a first beam;
measurement for a first cell;
measurement for a first radio access technology RAT;
measurement for a first frequency;
measurement performed based on a first synchronization signal and PBCH block measurement timing configuration SMTC;
measurement performed based on a first received signal strength indicator measurement timing configuration RMTC; and
cross-link interference CLI measurement.

Optionally, the measurement result is a result of processing a target object associated with the first measurement result reporting configuration, and the target object includes at least one of:
a second MO;
a second reference signal;
a second beam;
a second cell;
a second RAT;
a second frequency;
a second SMTC;
a second RMTC; and
CLI.

Optionally, the radio frequency unit 1001 is further configured to:
receive a first configuration from a network side device, where the first configuration includes at least one of:
the preset threshold;
the preset beam identifier;
the preset range;
a measurement configuration corresponding to the first measurement;
the first measurement result reporting configuration; and
a conditional reconfiguration parameter corresponding to the conditional reconfiguration procedure.

Optionally, the radio frequency unit 1001 is further configured to:
send terminal capability information to a network side device, where the terminal capability information indicates at least one of:
that the terminal supports flight;
a height range supported by the terminal;
that the terminal supports a directional antenna or a beam;
a beam range or an antenna direction supported by the terminal; and
that the terminal supports performing the first operation when the first condition is met.

Optionally, the radio frequency unit 1001 is further configured to:
send a first request to the network side device, where the first request is used to request the network side device to send all or some information of the first configuration.

Optionally, the first request further includes information that is expected by the terminal to be configured in the first configuration.

Optionally, the radio frequency unit 1001 is further configured to:
receive first enabling information, where the first enabling information indicates whether the terminal is allowed to send the first request.

Optionally, the radio frequency unit 1001 is further configured to:
send a second request to the network side device, where the second request is used to request the network side device to delete all or some information of the first configuration.

Optionally, the radio frequency unit 1001 is further configured to:
receive second enabling information, where the second enabling information indicates whether the terminal is allowed to send the second request.

Optionally, in a case that the terminal does not meet the first condition, the processor 1010 is further configured to perform at least one of:
stopping the first measurement by the terminal;
deleting the measurement result corresponding to the first measurement by the terminal;
stopping reporting the measurement result according to the first measurement result reporting configuration by the terminal; and
stopping the conditional reconfiguration procedure by the terminal.

Optionally, the radio frequency unit 1001 is further configured to:
send first information to a network side device in a case that the terminal starts the first measurement or the conditional reconfiguration evaluation, where the first information indicates that the terminal has started the first measurement or the conditional reconfiguration evaluation.

Optionally, the first information further includes at least one of:
height information of the terminal; and
beam information of the terminal.

An embodiment of this application further provides a network side device, including a processor and a communication interface. The communication interface is configured to enable the network side device to send a first configuration to a terminal. The first configuration includes a parameter related to a first condition, and further includes at least one of a measurement configuration corresponding to first measurement, a first measurement result reporting configuration, and a conditional reconfiguration parameter corresponding to a conditional reconfiguration procedure. The first condition is used to trigger the terminal to perform a first operation in a case that the terminal meets the first condition. The first operation includes at least one of starting the first measurement, reporting a measurement result according to the first measurement result reporting configuration, and starting the conditional reconfiguration procedure. The network side device embodiment corresponds to the foregoing method embodiment of the network side device. The implementation processes and implementations of the foregoing method embodiment are all applicable to the network side device embodiment, and the same technical effects can be achieved.

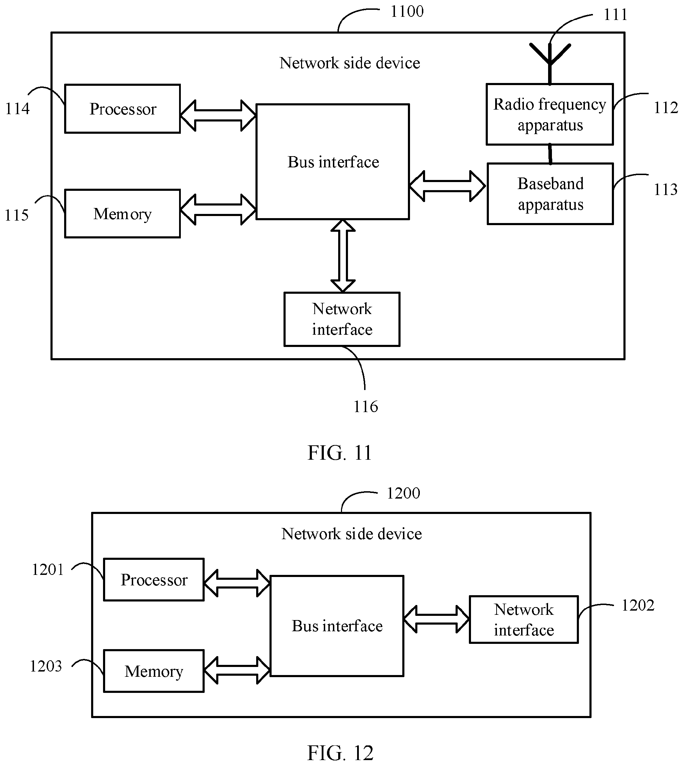

Specifically, an embodiment of this application further provides a network side device. As shown in FIG. 11, the network side device 1100 includes an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information by using the antenna 111, and sends the received information to the baseband apparatus 113 for processing. In a downlink direction, the baseband apparatus 113 processes to-be-sent information, and sends processed information to the radio frequency apparatus 112. After processing the received information, the radio frequency apparatus 112 sends processed information outward by using the antenna 111.

In the foregoing embodiment, the method performed by the network side device may be implemented in the baseband apparatus 113. The baseband apparatus 113 includes a baseband processor.

The baseband apparatus 113 may include, for example, at least one baseband board. A plurality of chips are disposed on the baseband board. As shown in FIG. 11, a chip is, for example, a baseband processor, and is connected to the memory 115 through a bus interface, to invoke a program in the memory 115 to perform network device operations shown in the foregoing method embodiment.

The network side device may further include a network interface 116, and the interface is, for example, a common public radio interface (common public radio interface, CPRI).

Specifically, the network side device 1100 in this embodiment of the present invention further includes instructions or a program that is stored in the memory 115 and that can be run on the processor 114. The processor 114 invokes the instructions or the program in the memory 115 to perform the method performed by the modules shown in FIG. 8, and the same technical effects can be achieved. To avoid repetition, details are not described herein again.

Specifically, an embodiment of this application further provides a network side device. As shown in FIG. 12, the network side device 1200 includes a processor 1201, a network interface 1202, and a memory 1203. The network interface 1202 is, for example, a common public radio interface (common public radio interface, CPRI).

Specifically, the network side device 1200 in this embodiment of the present invention further includes instructions or a program that is stored in the memory 1203 and that can be run on the processor 1201. The processor 1201 invokes the instructions or the program in the memory 1203 to perform the method performed by the modules shown in FIG. 8, and the same technical effects can be achieved. To avoid repetition, details are not described herein again.

An embodiment of this application further provides a readable storage medium. The readable storage medium stores a program or instructions. The processes in the foregoing measurement method embodiments can be implemented when the program or the instructions are executed by a processor, and the same technical effects can be achieved. To avoid repetition, details are not described herein again.

The processor is a processor in the terminal in the foregoing embodiment. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing measurement method embodiments, and the same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes of the foregoing measurement method embodiments, and the same technical effects can be achieved. To avoid repetition, details are not described herein again.

An embodiment of this application further provides a communication system, including a terminal and a network side device. The terminal may be configured to perform the steps of the foregoing measurement method, and the network side device may be configured to perform the steps of the foregoing measurement method.

It should be noted that in this specification, the term "include", "comprise", or any other variant thereof is intended to cover non-exclusive inclusion, so that a process, method, article, or apparatus that includes a series of elements includes those elements and other elements that are not explicitly listed or elements inherent to the process, method, article, or apparatus. In the absence of more restrictions, the element defined by the statement "includes one..." does not exclude the existence of another identical element in the process, method, article, or apparatus that includes the element. In addition, it should be noted that the scope of the methods and apparatuses in the implementations of this application is not limited to performing functions in the order shown or discussed, but may also include performing functions in a substantially simultaneous manner or in the reverse order based on the related functions. For example, the described methods may be performed in orders different from those described, and various steps may be further added, omitted, or combined. In addition, features described with reference to some examples may be combined in other examples.

According to the descriptions of the foregoing implementations, a person skilled in the art may clearly understand that the foregoing embodiment methods may be implemented through a combination of software and a required universal hardware platform, or certainly may be implemented by using hardware. However, in many cases, the former is a better implementation. Based on such an understanding, the technical solutions of this application, in essence or in terms of a part contributing to the prior art, may be embodied in the form of a computer software product. This computer software product is stored on a storage medium (for example, a ROM/RAM, a magnetic disk, or an optical disc), and includes several instructions to enable a terminal (which may be a mobile phone, a computer, a server, an air conditioner, a network device, or the like) to perform the methods described in embodiments of this application.

The foregoing describes the embodiments of this application with reference to the accompanying drawings. However, this application is not limited to the foregoing specific implementations. The foregoing specific implementations are merely exemplary, but are not limiting. Under the revelation of this application, many forms may be further made by a person of ordinary skill in the art without departing from the objective of this application and the protection scope of the claims and shall fall within the protection scope of this application.

## Claims

1. A measurement method, comprising:
performing, by a terminal, a first operation in a case that a first condition is met, wherein the first operation comprises at least one of:
starting first measurement;
reporting a measurement result according to a first measurement result reporting configuration; and
starting a conditional reconfiguration procedure; and
the first condition is related to a height and/or a beam of the terminal.

2. The method according to claim 1, wherein the first condition comprises at least one of the following:
the height of the terminal meets a preset threshold;
a beam identifier of the terminal is a preset beam identifier; and
a beam direction angle of the terminal is within a preset range.

3. The method according to claim 1, wherein the first measurement comprises at least one of:
measurement for a first measurement object MO;
measurement for a first reference signal;
measurement for a first beam;
measurement for a first cell;
measurement for a first radio access technology RAT;
measurement for a first frequency;
measurement performed based on a first synchronization signal and PBCH block measurement timing configuration SMTC;
measurement performed based on a first received signal strength indicator measurement timing configuration RMTC; and
cross-link interference CLI measurement.

4. The method according to claim 1 or 2, wherein the measurement result is a result of measuring a target object associated with the first measurement result reporting configuration, and the target object comprises at least one of:
a second MO;
a second reference signal;
a second beam;
a second cell;
a second RAT;
a second frequency;
a second SMTC;
a second RMTC; and
CLI.

5. The method according to claim 2, wherein the method further comprises:
receiving, by the terminal, a first configuration from a network side device, wherein the first configuration comprises at least one of:
the preset threshold;
the preset beam identifier;
the preset range;
a measurement configuration corresponding to the first measurement;
the first measurement result reporting configuration; and
a conditional reconfiguration parameter corresponding to the conditional reconfiguration procedure.

6. The method according to claim 5, wherein the method further comprises:
sending, by the terminal, a first request to the network side device, wherein the first request is used to request the network side device to send all or some information of the first configuration.

7. The method according to claim 6, wherein the first request further comprises information that is expected by the terminal to be configured in the first configuration.

8. The method according to claim 6, wherein the method further comprises:
receiving, by the terminal, first enabling information, wherein the first enabling information indicates whether the terminal is allowed to send the first request.

9. The method according to claim 5, wherein the method further comprises:
sending, by the terminal, a second request to the network side device, wherein the second request is used to request the network side device to delete all or some information of the first configuration.

10. The method according to claim 9, wherein the method further comprises:
receiving, by the terminal, second enabling information, wherein the second enabling information indicates whether the terminal is allowed to send the second request.

11. The method according to claim 1, wherein the method further comprises:
sending, by the terminal, terminal capability information to a network side device, wherein the terminal capability information indicates at least one of:
that the terminal supports flight;
a height range supported by the terminal;
that the terminal supports a directional antenna or a beam;
a beam range or an antenna direction supported by the terminal; and
that the terminal supports performing the first operation when the first condition is met.

12. The method according to claim 1, wherein in a case that the terminal does not meet the first condition, the method further comprises at least one of:
stopping, by the terminal, the first measurement;
deleting, by the terminal, the measurement result corresponding to the first measurement;
stopping, by the terminal, reporting the measurement result according to the first measurement result reporting configuration; and
stopping, by the terminal, the conditional reconfiguration procedure.

13. The method according to claim 1, wherein the method further comprises:
in a case that the terminal starts the first measurement or a conditional reconfiguration evaluation, sending, by the terminal, first information to a network side device, wherein the first information indicates that the terminal has started the first measurement or the conditional reconfiguration evaluation.

14. The method according to claim 13, wherein the first information further comprises at least one of:
height information of the terminal; and
beam information of the terminal.

15. A measurement method, comprising:
sending, by a network side device, a first configuration to a terminal, wherein the first configuration comprises at least one of:
a preset threshold;
a preset beam identifier;
a preset range;
a measurement configuration corresponding to first measurement;
a first measurement result reporting configuration; and
a conditional reconfiguration parameter corresponding to a conditional reconfiguration procedure; and
the preset threshold, the preset beam identifier, and the preset range are parameters related to a first condition, the first condition is used to trigger the terminal to perform a first operation in a case that the terminal meets the first condition, and the first operation comprises at least one of:
starting the first measurement;
reporting a measurement result according to the first measurement result reporting configuration; and
starting the conditional reconfiguration procedure.

16. The method according to claim 15, wherein the first condition comprises at least one of the following:
a height of the terminal meets the preset threshold;
a beam identifier of the terminal is the preset beam identifier; and
a beam direction angle of the terminal is within the preset range.

17. The method according to claim 15, wherein the first measurement comprises at least one of:
measurement for a first MO;
measurement for a first reference signal;
measurement for a first beam;
measurement for a first cell;
measurement for a first RAT;
measurement for a first frequency;
measurement performed based on a first SMTC;
measurement performed based on a first RMTC; and
CLI measurement.

18. The method according to claim 15 or 16, wherein the measurement result is a result of processing a target object associated with the first measurement result reporting configuration, and the target object comprises at least one of:
a second MO;
a second reference signal;
a second beam;
a second cell;
a second RAT;
a second frequency;
a second SMTC;
a second RMTC; and
CLI.

19. The method according to claim 15, wherein the method further comprises:
receiving, by the network side device, terminal capability information from the terminal, wherein the terminal capability information indicates at least one of:
that the terminal supports flight;
a height range supported by the terminal;
that the terminal supports a directional antenna or a beam;
a beam range or an antenna direction supported by the terminal; and
that the terminal supports performing the first operation when the first condition is met.

20. The method according to claim 15, wherein the method further comprises:
receiving, by the network side device, a first request from the terminal, wherein the first request is used to request the network side device to send all or some information of the first configuration.

21. The method according to claim 20, wherein the first request further comprises information that is expected by the terminal to be configured in the first configuration.

22. The method according to claim 20, wherein the method further comprises:
sending, by the network side device, first enabling information to the terminal, wherein the first enabling information indicates whether the terminal is allowed to send the first request.

23. The method according to claim 15, wherein the method further comprises:
receiving, by the network side device, a second request from the terminal, wherein the second request is used to request the network side device to delete all or some information of the first configuration.

24. The method according to claim 23, wherein the method further comprises:
sending, by the network side device, second enabling information to the terminal, wherein the second enabling information indicates whether the terminal is allowed to send the second request.

25. The method according to claim 15, wherein the method further comprises:
receiving, by the network side device, first information, wherein the first information indicates that the terminal has started the first measurement or a conditional reconfiguration evaluation.

26. The method according to claim 25, wherein the first information further comprises at least one of:
height information of the terminal; and
beam information of the terminal.

27. A measurement apparatus, comprising:
a processing module, configured to perform a first operation in a case that a first condition is met, wherein the first operation comprises at least one of:
starting first measurement;
reporting a measurement result according to a first measurement result reporting configuration; and
starting a conditional reconfiguration procedure; and
the first condition is related to a height and/or a beam of a terminal.

28. A measurement apparatus, comprising:
a transceiver module, configured to send a first configuration to a terminal, wherein the first configuration comprises a parameter related to a first condition, and further comprises at least one of:
a measurement configuration corresponding to first measurement;
a first measurement result reporting configuration; and
a conditional reconfiguration parameter corresponding to a conditional reconfiguration procedure; and
the first condition is used to trigger the terminal to perform a first operation in a case that the terminal meets the first condition, and the first operation comprises at least one of:
starting the first measurement;
reporting a measurement result according to the first measurement result reporting configuration; and
starting the conditional reconfiguration procedure.

29. A terminal, comprising a processor and a memory, wherein the memory stores a program or instructions executable on the processor, and the steps of the measurement method according to any one of claims 1 to 14 are implemented when the program or instructions are executed by the processor.

30. A network side device, comprising a processor and a memory, wherein the memory stores a program or instructions executable on the processor, and the steps of the measurement method according to any one of claims 15 to 26 are implemented when the program or instructions are executed by the processor.

31. A readable storage medium, wherein the readable storage medium stores a program or instructions, and the steps of the measurement method according to any one of claims 1 to 14 or the steps of the measurement method according to any one of claims 15 to 26 are implemented when the program or instructions are executed by a processor.
